Europäisches Patentamt

European Patent Office

Office européen des brevets

(11) Publication number: **0 075 448**
A2

# (12) EUROPEAN PATENT APPLICATION

(21) Application number: 82304889.7

(22) Date of filing: 16.09.82

(51) Int. Cl.³: **B 23 D 35/00,** B 23 D 25/08

(30) Priority: 21.09.81 GB 8128428

(43) Date of publication of application: 30.03.83
Bulletin 83/13

(84) Designated Contracting States: **AT BE CH DE FR GB IT
LI LU NL SE**

(71) Applicant: **DAVY McKEE (SHEFFIELD) LIMITED, Prince
of Wales Road, Sheffield S9 4EX Yorkshire (GB)**

(72) Inventor: **Kaczmaryk, Edward, 20, Charnock Crescent,
Gleadless Sheffield S12 3HB Yorkshire (GB)**
Inventor: **Gronbech, Robert William, 59, Abbeydale Park
Rise, Sheffield Yorkshire (GB)**

(74) Representative: **Kirk, Geoffrey Thomas et al, 2, Pear Tree
Court Farringdon Road, London EC1R 0DS (GB)**

(54) Double bladed shear.

(57) A shear for shearing metal workpieces has two blade
carriers which are moved relative to each other so that
blades carried by the two carriers are brought into shearing
relation with the workpiece. Each blade carrier has support
for two blades and is movable between two positions in
which respective blades are in the operating position. With
this arrangement, once one pair of blades need resharpen-
ing, the other pair is brought into use and then both pairs
are eventually changed together.

## DOUBLE BLADED SHEAR

This invention relates to a shear for shearing metal workpieces.

To sever metal workpieces, it is well known to use a shear which consists essentially of a pair of blade carriers, each carrying a blade. The workpiece to be cut is positioned between the spaced apart blades and one or both of the carriers is then moved towards the other so that the blades form a shearing action on the workpiece. There are various ways of producing the movement of the blade carriers towards and away from each other but it is usual to mount at least one of the blade carriers on a crank mechanism which serves to move the blades into and out of shear relation with the workpiece.

Periodically it becomes necessary to replace the shear blades and to this end they are usually withdrawn from the carriers and replacement blades fitted in position. The withdrawn blades are then removed for grinding and dressing. Clearly, while the old blades are being removed and the new blades fitted into the blade carriers, the shear cannot be used and, consequently, the need to replace the blades should be reduced to a minimum and the time taken to replace a set of blades should also be reduced to a minimum.

It is an object of the present invention to provide a shear in which the time during which the shear is inoperative because of blade changing is reduced.

According to the present invention, a shear has a pair of blade carriers each having a first support for a blade and means for displacing at least one of the blade carriers such that a blade supported thereon co-operates with a blade supported on the other carrier to provide a shearing action on a workpiece positioned in the shear, characterised in that each blade carrier has a second support for a blade and means are provided for moving the carrier between a first position, in which a blade in the first support is in an operative shearing position and a blade in the second support is not in an operative shearing position, and a second position, in which a blade in the first support is not in an operative shearing position and a blade in the second support is in an operative shearing position.

In this way, the time interval between replacement of blades can be virtually doubled and, when the first set of blades need changing, they are in fact not changed but simply moved to a position which brings the second set of blades into the operative position and, when these blades also need replacing, both sets of blades can be replaced during

0075448

the same operation.

Alternatively, one set of blades can be of the type which forms a straight crop on the workpiece and the other set of blades can be of a type which will produce a pointed front end on a workpiece. By simply moving the carriers between the first and second positions, the appropriate pair of blades can be selected.

In order that the invention may be more readily understood, it will now be described, by way of example only, with reference to the accompanying drawings, in which:-

Figure 1 is a sectional side elevation of a crank shear illustrating one embodiment of the present invention, and

Figure 2 is a side elevation of part of the crank shear illustrating adjustment means for one of the carriers.

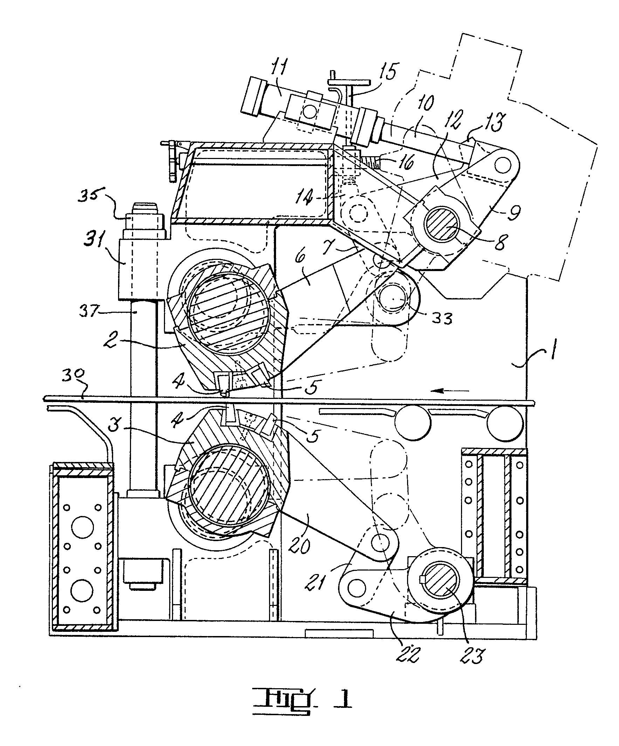

Referring to Figure 1, a crank shear for shearing heavy metal workpieces comprises a housing 1 carrying a pair of blade carriers 2, 3 arranged one above the other. Each of the blade carriers is eccentrically mounted on separate shafts and drive means (not shown) serve to rotate the shafts and cause the blade carriers to move towards and away from each other in the well known manner. Each blade carrier extends for substantially the entire width of the shear

4    0075448

and removably carries a pair of shear blades in supports 4, 5. The upper blade carrier 2 has a rigid arm 6 extending outwardly from it and the outer end of the arm is pivotally secured to one end of a link 7. A substantially horizontal shaft 8 is mounted for rotation in bearings and an arm 9 is secured to the shaft. The outer end of the arm is pivotally secured to the piston rod 10 of a piston-cylinder device 11, the arrangement being such that, when the piston-cylinder device is actuated, the arm 9 is caused to rotate the shaft 8. Also rigidly mounted on the shaft 8 is a link 12 which has an end portion pivotally secured to the opposite end of the link 7 from the arm 6. The member 12 carries two lugs 13, 14 and the frame 1 carries two rotatable screws 15, 16 respectively. In the position shown in full lines in Figure 1, the lug 14 is engaged against the lower end of the screw 15 to prevent rotation of the link 12 in a clockwise direction. In the position shown in broken lines in Figure 1, the lug 13 is engaged against the outer end of the screw 16 to prevent further movement of the link 12 in the anti-clockwise direction. The link 12 is thus movable by the piston-cylinder device 11 between the two positions in which it engages against one or other of the screws. The screws are both adjustable to thereby vary the angular position of movement of the link 12.

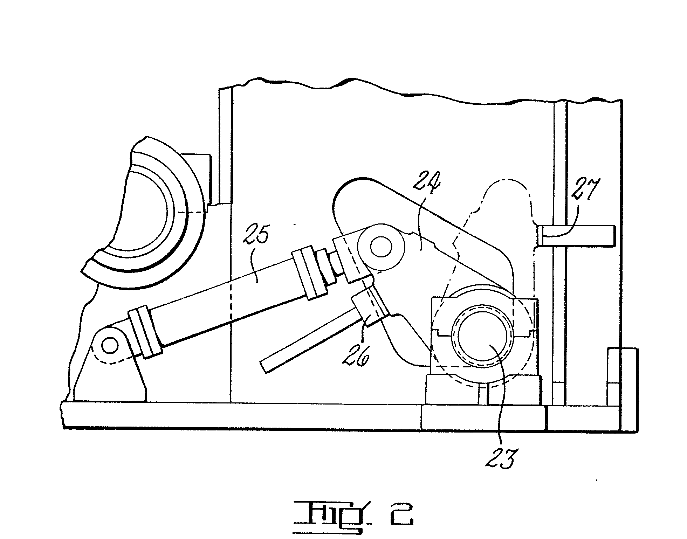

Similarly, the lower blade carrier 3 has an outwardly extending arm 20, which is connected at one end to a link 21, and the other end of this link is pivotally secured to an arm 22, which is keyed to another substantially horizontal shaft 23. This shaft 23 is shown in more detail in Figure 2, where it can be seen that it is mounted for rotation in fixed bearings and an arm 24 is rigidly secured to the shaft and a portion of the arm is pivotally secured to one end of a piston-cylinder device 25. By operating the piston-cylinder device, the shaft 23 is rotated and, consequently, the arm 22 is rotated. The angular position of the arm 24 is limited by a pair of stops 26, 27 respectively.

In the positions shown in full lines in Figure 1, the shear blades in the support 4 are arranged in operative shearing positions and, when the shear is operated, the carriers are displaced towards each other so that these two blades co-operate with each other in a shearing relation on a workpiece 30 positioned between them.

When these blades need replacing or, alternatively, if the blades in the support 5 are to be used, the piston-cylinder device 11 is operated to displace the arm 12, pivoting the arm 6 to the position shown in broken lines. This movement of the arm 6 moves the blade in support 5 to the operative shearing position. Similarly, the piston-cylinder device 25 is operated to rotate the shaft 23 and to move the arm 20 into the position shown in broken lines where the blade in support 5 comes into an operative shearing position. In this operative shearing position of the two blades in support 5, the two blades in support 4 are each in a non-operative shearing position. Consequently, it can be seen that, simply by operating the piston-cylinder devices, the two blades which are in use in the shear can be moved to a non-shearing position and can be replaced by the other pair of shear blades which are present in the blade carriers.

It is necessary to ensure that the shear is operated with one or other of the two pairs of blades but not with one blade from each pair. To this end, it is convenient to interconnect the piston-cylinder device 11 with the piston-cylinder device 25 by hydraulic means so that the devices displace the two blade carriers simultaneously to bring one or other pair of blades into shearing relation.

The blade carrier 2 and the shaft on which it is mounted are conventionally mounted in a housing 31 which are pivoted about a pivot 33. The housing is arranged in its normal operating position and is held in this position by a nut 35 on the upper end of a post 37. When it is necessary to remove the blades from the carrier 2, the nut 35 is removed and the housing 31 is pivoted about the shaft 33 to the position shown in chain line. The blades are then in an upward facing position from which they can be lifted upwardly by a crane. Once the blades have been swung to one side, the lower blades can be supported from above and lifted straight up.

0075448

Claims:

1.       A shear having a pair of blade carriers (2, 3) each having a first support (4) for a blade and means for displacing at least one of the blade carriers such that a blade supported thereon co-operates with a blade supported on the other carrier to provide a shearing action on a workpiece (30) positioned in the shear, characterised in that each blade carrier (2, 3) has a second support (5) for a blade and means (8, 23) are provided for moving the carrier between a first position, in which a blade in the first support (4) is in an operative shearing position and a blade in the second support (5) is not in an operative shearing position, and a second position, in which a blade in the first support (4) is not in an operative shearing position and a blade in the second support (5) is in an operative shearing position.

2.       A shear as claimed in claim 1, characterised in that the means for moving the carrier between the first and second positions includes a rotatable shaft (8, 23) connected by a linkage to the carrier (2, 3), and means (11, 25) for rotating the shaft through a predetermined angle.

3.       A shear as claimed in claim 2, characterised in that the predetermined angle is adjustable.

4.      A shear as claimed in claim 2 or 3, characterised in that the means for rotating the shaft comprises a piston-cylinder device (11, 25) connected to a link (9, 24) mounted on the shaft.

5.      A shear as claimed in any preceding claim, in which the blade carriers are mounted one above the other and characterised in that the upper blade carrier is pivotable to a position in which blades in the carrier are removable substantially vertically.

**FIG. 1**

Fig. 2